# EUROPÄISCHE PATENTSCHRIFT

(11) **EP 1 280 693 B1**
(45) Veröffentlichungstag und Bekanntmachung des Hinweises auf die Patenterteilung: **27.07.2005**
(21) Anmeldenummer: 01947259.6
(22) Anmeldetag: 05.05.2001
(51) Int. Cl.: B62D 25/08, B62D 25/20, B62D 21/15

(54) **Y-HECKVERSTREBUNG ZUR ERHÖHUNG DER BIEGE- UND TORSIONSSTEIFIGKEIT VON ROHKAROSSERIEN**
Y-REAR BRACE FOR INCREASING THE BENDING AND TORSIONAL RIGIDITY OF A BASE CHASSIS
ENTRETOISEMENT ARRIERE EN Y DESTINE A AUGMENTER LA RIGIDITE A LA FLEXION ET A LA TORSION DE CARROSSERIES BRUTES

(30) Priorität: 11.05.2000 DE 10023110
(43) Veröffentlichungstag der Anmeldung: 05.02.2003
(73) Patentinhaber: Bayerische Motoren Werke Aktiengesellschaft, 80809 München (DE)
(72) Erfinder: OANCEA, Nikolaus, 85757 Karlsfeld (DE); WENDLAND, Norbert, 80993 München (DE); TREIS, Michael, 84435 Lengdorf (DE)
(86) Internationale Anmeldenummer: PCT/EP2001/005106
(87) Internationale Veröffentlichungsnummer: WO 2001/085528

(56) Entgegenhaltungen:
- EP-A- 0 803 383
- DE-A- 19 829 432
- US-A- 5 074 587

## Beschreibung

Die Erfindung betrifft eine Y-Heckverstrebung zur Erhöhung der Biege- und Torsionssteifigkeit von Rohkarosserien.

In Rohkarosserien für Kraftfahrzeuge ist üblicherweise im hinteren Bereich ein Schubfeld, ein mittragender Gepäckraumboden oder - sofern das Reserverad im hinteren Bereich der Karosserie gelagert wird - eine Mulde für das Reserverad vorgesehen, die jeweils ein mittragendes Bauteil bilden, das zwischen dem Heckquerträger, dem hinteren Querträger und dem rechten und linken Längsträger angeordnet ist. Dabei kann auch eine in Längsrichtung der Rohkarosserie verlaufende Stütze zwischen dem Heckträger und einem hinter den Rücksitzen angeordneten Aufnahmebock zusätzliche Herksteifigkeit erzielen (siehe DE-A-19829432).

Wenn aus konstruktiven Überlegungen, z. B. zur Gewichtsreduktion, das Schubfeld oder der Gepäckraumboden entfällt oder die Mulde für das Reserverad bzw. der Gepäckraumboden als nichttragendes Bauteil, z. B. aus Kunststoff hergestellt werden soll, geht statische und dynamische Biege- und Torsionssteifigkeit am Fahrzeug verloren.

Es ist daher Aufgabe der vorliegenden Erfindung, bei Fahrzeugen ohne mittragenden Gepäckraumboden für eine ausreichende statische und dynamische Biege- und Torsionssteifigkeit zu sorgen.

Die erfindungsgemäße Y-Heckverstrebung mit den Merkmalen des Anspruchs 1 hat den Vorteil, daß diese Maßnahme zu einer erheblichen Erhöhung der statischen und dynamischen Biege- und Torsionssteifigkeit bei minimalem Gewichtseinsatz führt.

Durch die in den Unteransprüchen aufgeführten Merkmale sind vorteilhafte Weiterbildungen der im Anspruch 1 angegebenen Heckverstrebung möglich.

Insbesondere ist es von Vorteil, wenn der Aufnahmebock aus einem etwa dreieckförmigen Träger oder aus einem alternativen Aufnahmeaufbau besteht, der quer zur Längsrichtung der Rohkarosserie angeordnet ist. Ein solcher Aufnahmebock kann einerseits leicht und einfach hergestellt werden und ist andererseits in der Rohkarosserie leicht unterzubringen, insbesondere dann, wenn er sich nach einer weiteren Ausgestaltung mit seiner Spitze nach unten in Richtung Fahrbahn erstreckt.

Wenn der Heckquerträger und die obere Seite des dreieckförmigen Aufnahmebocks im wesentlichen in einer Ebene angeordnet sind, ergibt sich in vorteilhafter Weise eine im wesentlichen horizontale ebene Befestigungsfläche, an der z. B. die Mulde für das Reserverad gelagert werden kann.

Damit eine hohe Steifigkeit erzielt werden kann, verläuft die Stütze von der Mitte des Heckquerträgers zur Spitze des dreieckförmigen Aufnahmebocks und ist über je einen Zug-Druckstab an je einem Schweller abgestützt.

Wenn die beiden Zug- bzw. Druckstäbe im Bereich der Spitze des dreieckförmigen Aufnahmebocks abgestützt sind, können die von der im wesentlichen an der gleichen Stelle abgestützen Stütze eingeleiteten Kräfte sicher in der Rohkarosserie verteilt werden.

Damit die Zug- bzw. Druckstäbe bei einer Belastung nicht ausknicken, sind sie vorteilhafterweise in ihrer Mitte über eine Stütze an der Rohkarosserie abgestützt sein.

Weitere Vorteile und Merkmale der vorliegenden Erfindung werden aus der nachfolgenden detaillierten Beschreibung eines Ausführungsbeispieles einer erfindungsgemäßen Heckverstrebung im Zusammenhang mit der beigefügten Zeichnung ersichtlich. Es zeigen:
- Fig. 1: die erfindungsgemäße Y-Heckverstrebung in einer Ansicht von unten,
- Fig. 2: eine Seitenansicht der erfindungsgemäßen Y-Heckverstrebung,
- Fig. 3: eine Schrägansicht der erfindungsgemäßen Y-Heckverstrebung, und
- Fig. 4: eine Detailansicht eines alternativen Aufnahmeaufbaus.

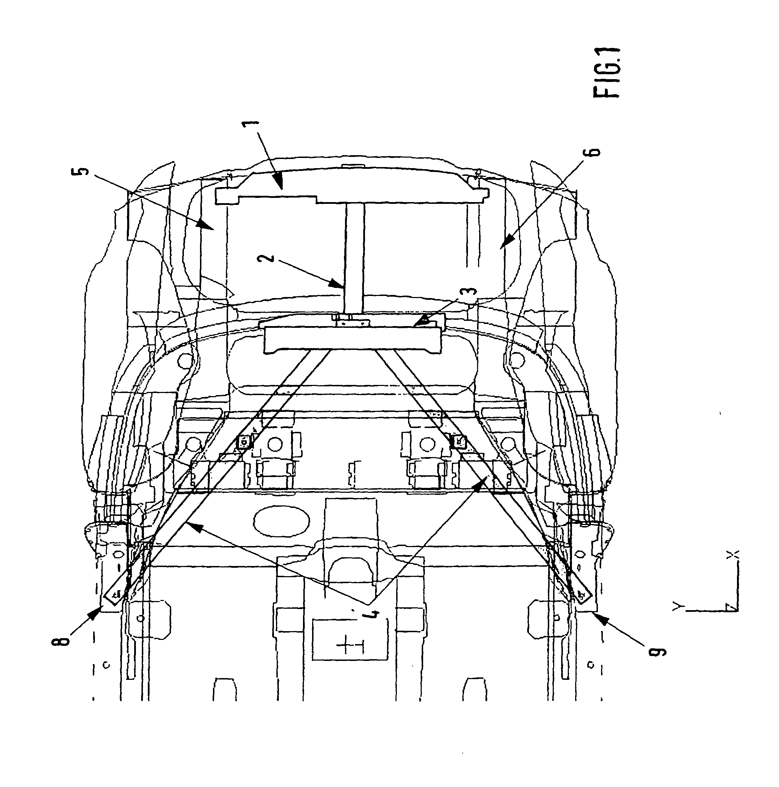

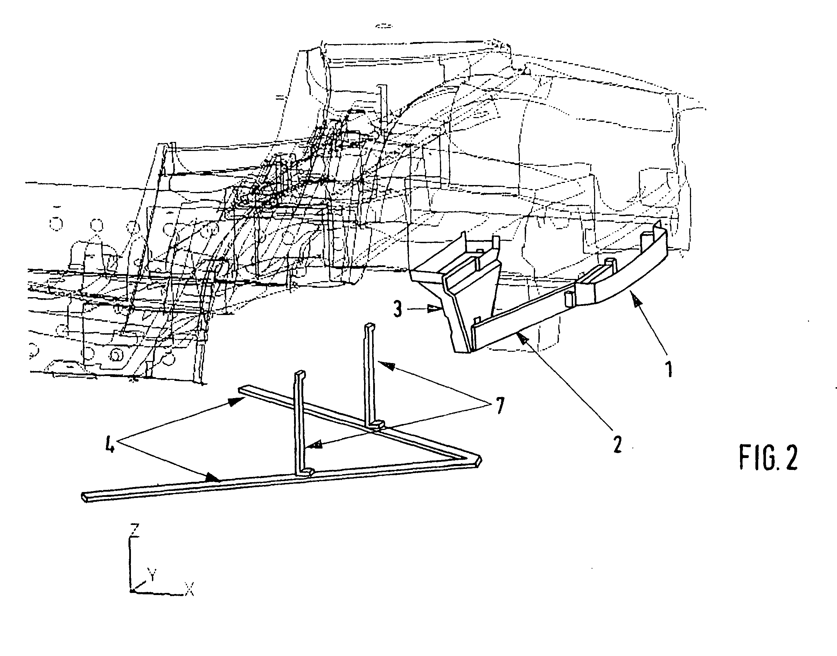

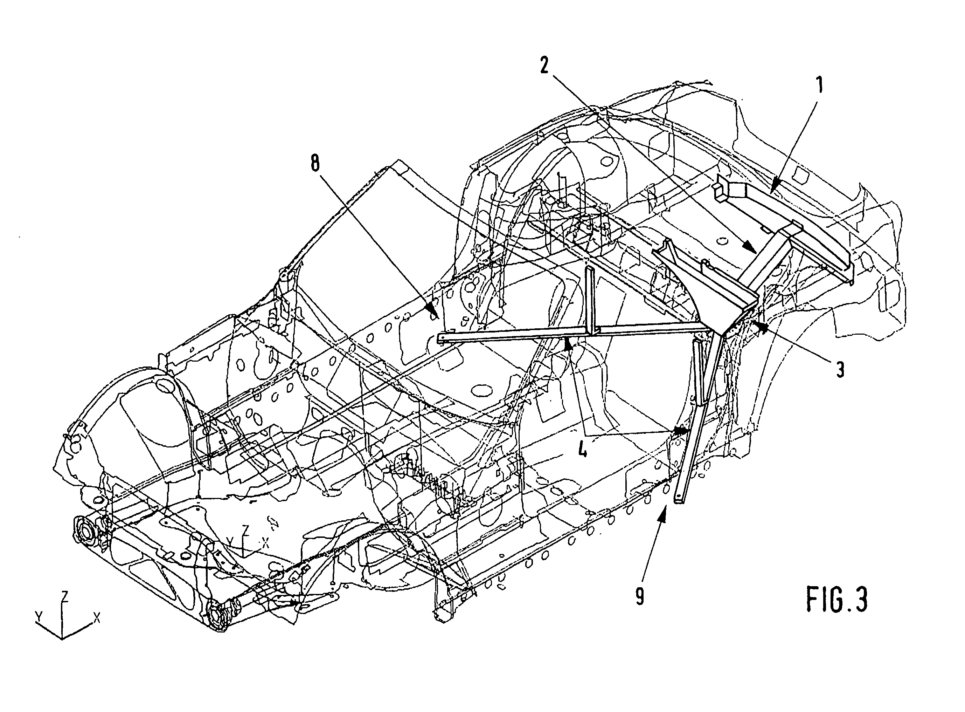

In den Figuren 1 bis 3 ist eine erfindungsgemäße Heckverstrebung dargestellt. Man erkennt Teile einer nicht näher dargestellten Rohkarosserie, in welche die erfindungsgemäße Heckverstrebung eingebaut ist.

Die Y- Heckverstrebung besteht aus einem Heckquerträger 1, der zwischen einem rechten und einem linken Längsträger 5, 6 im hinteren Bereich einer Rohkarosserie angeordnet ist. Von dem Heckquerträger 1 erstreckt sich eine Strütze 2 in Längsrichtung der Rohkarosserie in Richtung auf einen Aufnahmebock 3. Die Stütze 2 ist mittig an dem Heckquerträger 1 angeordnet.

Der Aufnahmebock 2 besteht aus einem im wesentlichen dreieckförmigen Träger, der quer zur Längsrichtung der Rohkarosserie angeordnet ist und dessen Spitze sich nach unten in Richtung Fahrbahn erstreckt. Der Heckquerträger 1 und die obere Seite des dreieckförmigen Aufnahmebocks 3 sind im wesentlichen in einer Ebene angeordnet. Dadurch ergibt sich eine im wesentlichen horizontale ebene Ebene, auf der z. B. die Mulde zur Aufnahme eines Reserverades befestigt werden kann.

Die am Heckquerträger 1 befestigte Stütze 2 verläuft von der Mitte des Heckquerträgers 1 zur Spitze des dreieckförmigen Aufnahmebocks 3 und ist somit gegenüber einer Horizontalen geneigt, da die Spitze des Aufnahmebocks 3 tiefer liegt als der Heckquerträger 1.

Damit eine hohe Torsionssteifigkeit erreicht wird, ist der Aufnahmebock 3 über je einen Zug-Druckstab 4 an je einem Schweller 8, 9 abgestützt. Dabei sind die Zug- bzw. Druckstäbe 4 im Bereich der Spitze des dreieckförmigen Aufnahmebocks 3 abgestützt, so daß Zug- bzw. Druckkräfte in dem Aufnahmebock eine Querkraft als resultierende Kraft eingeleitet werden kann.

Zusätzlich ist jeder Druckstab 4 insbesondere in seiner Mitte über eine Stütze 7 an der Rohkarosserie abgestützt, damit ein Ausknicken der Druckstäbe 4 vermieden wird.

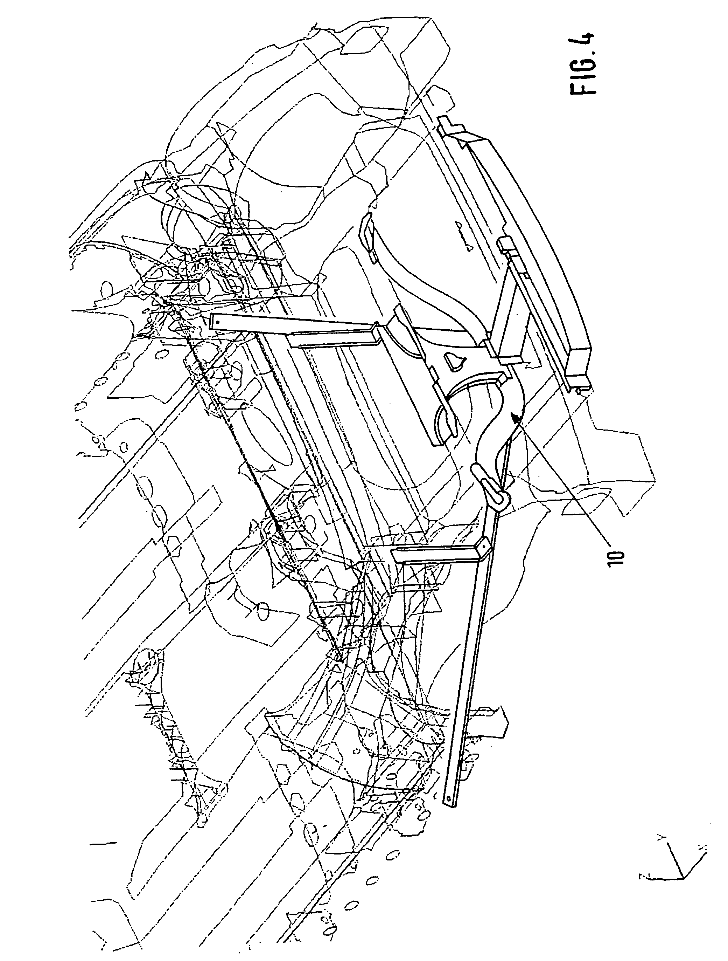

In Figur 4 ist schließlich eine Detailansicht eines alternativen Aufnahmeaufbaus 10 dargestellt.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Biege- und torsionssteife Y-Heckverstrebung für eine Rohkarosserie bestehend aus einem quer zur Längsrichtung der Rohkarosserie verlaufenden Heckquerträger (1), einer in Längsrichtung der Rohkarosserie verlaufenden Stütze (2), einem Aufnahmebock (3) und zwei Zug-Druckstreben (4) zwischen Aufnahmebock und Schwellerende wobei die Zug-Druckstreben jeweils etwa mittig an die Rohkarosserie abgestützt sind.

2. Y-Heckverstrebung nach Anspruch 1, wobei der Aufnahmebock (3) aus einem etwa dreieckförmigen Träger besteht, der quer zur Längsrichtung der Rohkarosserie angeordnet ist.

3. Y-Heckverstrebung nach Anspruch 2, wobei der Aufnahmebock (3) sich mit seiner Spitze nach unter in Richtung Fahrbahn erstreckt.

4. Y-Heckverstrebung nach einem der Ansprüche 1 bis 3, wobei der Heckquerträger (1) und die obere Seite des dreieckförmigen Aufnahmebocks (3) im wesentlichen in einer Ebene angeordnet sind.

5. Y-Heckverstrebung nach Anspruch 4, wobei die Stütze (2) von der Mitte des Heckquerträgers (1) zur Spitze des dreieckförmigen Aufnahmebocks (3) verläuft.

6. Y-Heckverstrebung nach einem der Ansprüche 1 bis 5, wobei der Aufnahmebock (3) über je einen Zug-Druckstab (4) an je einem Schweller (8, 9) abgestützt ist.

7. Y-Heckverstrebung nach Anspruch 5, wobei die beiden Zug- bzw. Druckstäbe (4) im Bereich der Spitze des dreieckförmigen Aufnahmebocks (3) abgestützt sind.

8. Y-Heckverstrebung nach einem der Ansprüche 1 bis 7, wobei jeder Zug-Druckstab (4) insbesondere in seiner Mitte über einen Stütze (7) an der Rohkarosserie abgestützt ist.

## Claims

1. Y tail strutting, resistant to bending and torsion, for a car-body shell comprising a transverse tail bearer (1) extending transversely of the longitudinal direction of the shell, a truss (2) in the longitudinal direction of the shell, a receiving frame (3) and two tension-compression struts (4) between the receiving frame and the sillboard end, wherein the tension-compression struts are braced approximately centrally against the shell.

2. Y tail strutting according to claim 1, wherein the receiving frame (3) comprises an approximately triangular bearer disposed transversely of the longitudinal direction of the shell.

3. Y tail strutting according to claim 2, wherein the tip of the receiving frame (3) extends downwards towards the road.

4. Y tail strutting according to any of claims 1 to 3, wherein the transverse tail bearer (1) and the top of the triangular receiving frame (3) are disposed substantially in a plane.

5. Y tail strutting according to claim 4, wherein the truss (2) runs from the middle of the transverse tail bearer (1) to the tip of the triangular receiving frame (3).

6. Y tail strutting according to any of claims 1 to 5, wherein the receiving frame (3) is braced against each sillboard (8, 9) via respective tension-compression rods (4).

7. Y tail strutting according to claim 5, wherein the two tension or compression rods (4) are braced in the region of the tip of the triangular receiving frame (3).

8. Y tail strutting according to any of claims 1 to 7, wherein each tension-compression rod (4), especially at the middle thereof, is braced against the shell via a truss (7).

## Revendications

1. Entretoisement d'arrière en Y rigide à la flexion et à la torsion pour une carrosserie brute, comportant
- une entretoise transversale d'arrière (1) qui s'étend transversalement à la direction longitudinale de la carrosserie brute,
- un appui (2) qui s'étend en direction longitudinale de la carrosserie brute,
- un support de réception (3) et
- deux barres de traction/compression (4) entre le support de réception et l'extrémité du seuil de portière,
dans lequel
chacune des barres de traction/ compression est soutenue à peu près au milieu sur la carrosserie brute.

2. Entretoisement d'arrière en Y selon la revendication 1,
dans lequel
le support de réception (3) se compose d'une entretoise à peu près triangulaire placée transversalement à la direction longitudinale de la carrosserie brute.

3. Entretoisement d'arrière en Y selon la revendication 2,
dans lequel
le support de réception (3) s'étend la pointe vers le bas en direction de la chaussée.

4. Entretoisement d'arrière en Y selon l'une des revendications 1 à 3,
dans lequel
l'entretoise transversale d'arrière (1) et le côté supérieur du support de réception (3) triangulaire se trouvent pratiquement dans un plan.

5. Entretoisement d'arrière en Y selon la revendication 4,
dans lequel
l'appui (2) s'étend du centre de l'entretoise transversale d'arrière (1) vers la pointe du support de réception (3) triangulaire.

6. Entretoisement d'arrière en Y selon l'une des revendications 1 à 5,
dans lequel
le support de réception (3) est soutenu sur chacun des seuils de portière (8, 9) par l'intermédiaire d'une barre de traction/compression (4) respectivement.

7. Entretoisement d'arrière en Y selon la revendication 5,
dans lequel
les deux barres de traction ou de compression (4) sont soutenues dans la zone où le support de réception (3) triangulaire forme une pointe.

8. Entretoisement d'arrière en Y selon l'une des revendications 1 à 7,
dans lequel
chaque barre de traction/compression (4), en particulier en son milieu, est soutenue sur la carrosserie brute par l'intermédiaire d'un appui (7).
